# EUROPEAN PATENT APPLICATION

(11) **EP 1 855 508 A1**
(43) Date of publication of application: **14.11.2007**
(21) Application number: 06714764.5
(22) Date of filing: 27.02.2006
(51) Int. Cl.: H05B 33/14, H05B 33/22

(54) **DISPERSION-TYPE ELECTROLUMINESCENT ELEMENT**

(30) Priority: 28.02.2005 JP 2005053565
(71) Applicant: FUJIFILM CORPORATION, Minato-ku Tokyo 106-8620 (JP)
(72) Inventor: SHIROTA, Masashi c/o FUJIFILM Corporation, Kanagawa (JP)
(74) Representative: HOFFMANN EITLE
(86) International application number: PCT/JP2006/303627
(87) International publication number: WO 2006/093095

(57) **Abstract**

A dispersion type EL element is provided which shows an excellent luminance and has an improved life. Further, a dispersion type EL element is provided which permits a large-sized panel, shows an excellent luminance and an excellent durability and has an improved life.

A dispersion type electroluminescent element comprising a pair of electrodes one of which is a back electrode and the other of which is a transparent electrode and, disposed between the electrodes, at least an insulating layer and a luminescent-particle-containing luminescent layer,

the luminescent particles having an average size of from 1 µm to less than 20 µm and a coefficient of variation of from 3% to less than 35%, and the element having a barrier layer containing at least one material selected from the group consisting of a thermoplastic resin, a thermoset resin and a Ultraviolet-cured resin between the transparent electrode and the luminescent layer.

## Description

### Technical Field

The present invention relates to dispersion type EL elements capable of giving a high luminance and having a long life, which has a light-emitting layer formed by dispersing and coating electroluminescent (EL) powdery particles.

### Background Art

EL luminescent substance is a luminescent substance of the voltage excitation type, and there are known a dispersion type EL which is a luminescent element containing luminescent particles interposed between electrodes and a thin film type EL. The dispersion type EL element generally has a structure comprising two electrodes at least one of which is transparent and, interposed between these, a layer comprising a binder having a high permittivity and luminescent particles dispersed therein. This element luminesces upon application of an alternating-current electric field across the two electrodes. Such luminescent elements employing EL luminescent particles can be produced in a thickness of several millimeters or smaller and have many advantages, for example, that they are surface light-emitting devices and are reduced in heat generation. Because of this, the luminescent elements are expected to use in applications such as traffic signs, various interior or exterior illuminators, light sources for flat panel displays such as liquid-crystal displays, and light sources for large-area advertising illuminators.
However, luminescent elements prepared by employing the luminescent particles have the defects that they show a lower luminance and have a shorter luminescent life than luminescent elements based on other principles and, therefore, various improvements have conventionally been attempted.

As a technique for enhancing luminance, there has been known a technique of using luminescent particles having a smaller size (JP-A-2002-235080 (the term "JP-A" as used herein means an "unexamined published Japanese patent application") and JP-A-2004-265866). In the case of constituting an EL element employing luminescent particles having a smaller size, the number of luminescent particles per unit volume in the luminescent layer can be increased and, as a result, luminance of the EL element can be enhanced. However, EL elements employing luminescent particles having a smaller size have the defect that they suffer accelerated deterioration of luminance.

On the other hand, it has generally been known, as one factor for the deterioration of EL elements, that the interface where luminescent particles are in contact with the transparent electrode is deteriorated by heat, oxygen or the like to blacken the luminescent screen. In order to solve this problem, it has been disclosed to provide a resin layer having a high permittivity and containing dispersed therein fine palladium particles between the luminescent layer and the transparent electrode (JP-A-5-325645). Regarding delamination of the luminescent layer and the transparent electrode from each other which is generally known as other deteriorating factor, several techniques for improving adhesion properties have been disclosed (JP-A-8-288066 and JP-A-10-134963).

### Disclosure of the Invention

### Problems that the Invention is to Solve

However, these techniques have the defects that, particularly with luminescent particles having a small average size, the ratio of luminescent particles in contact with the transparent electrode within the luminescent layer increases, that blackening or delamination is liable to occur due to poor resistance against heat or oxygen and that, particularly under the conditions for generating a high luminance (e.g., operation at a frequency of 800 Hz or more or at a voltage of 100 V or more), durability-improving effects are insufficient.

Therefore, an object of the invention is to provide a dispersion type EL element which gives an excellent luminance and has an excellent durability and an improved life. A further object of the invention is to provide a dispersion type EL element which permits formation of a large-sized panel and which gives an excellent luminance and has an excellent durability and an improved life.

### Means for Solving the Problems

As a result of intensive investigations made by the present inventors, it has been found that long-time, high-luminance lighting with high efficiency can be continued by using in the luminescent layer luminescent particles having a size of from 1 µm to less than 20 µm and a coefficient of variation of as small as from 3% to less than 35% and disposing a barrier layer between the luminescent layer and the transparent layer. Namely, the invention comprises the following constitutions.

(1) A dispersion type electroluminescent element comprising a pair of electrodes one of which is a back electrode and the other of which is a transparent electrode and, disposed between the electrodes, at least an insulating layer and a luminescent-particle-containing luminescent layer,
   the luminescent particles having an average size of from 1 µm to less than 20 µm and a coefficient of variation of from 3% to less than 35%, and the element having a barrier layer containing at least one material selected from the group consisting of a thermoplastic resin, a thermoset resin and a Ultraviolet-cured resin between the transparent electrode and the luminescent layer.
(2) The dispersion type EL element as described in (1), wherein the at least one material selected from the group consisting of a thermoplastic resin, a thermoset resin and a Ultraviolet-cured resin which constitutes the barrier layer amounts to 20% or more by volume ratio of the barrier layer.
(3) The dispersion type EL element as described in (1) or (2), wherein the interlayer has a thickness of from 0.01 µm to less than 10 µm.
(4) The dispersion type EL element as described in (1) to (3), wherein the insulating layer has a thickness of from 10 µm to less than 30 µm.
(5) The dispersion type EL element as described in (1) to (4), wherein the luminescent layer has a thickness of from 30 µm to less than 70 µm.
(6) The dispersion type EL element as described in (1) to (5), wherein the luminescent particles are zinc sulfide particles containing copper as an activator and contain at least one kind of metal elements belonging to the second transition element series of from group 6 to group 10.
(7) The dispersion type EL element as described in (1) to (6), wherein the barrier layer contains at least one of metal or metal oxides, metal chlorides, metal nitrides and metal sulfides.

### Advantages of the Invention

The dispersion type EL element (hereinafter referred to as "EL element") of the invention gives an excellent luminance and shows an excellent durability and, further, has a long life. Also, the dispersion type EL element of the invention permits formation of a large-sized panel, gives an excellent luminance and shows an excellent durability and, further, has a long life.

### Best Mode for Carrying Out the Invention

The invention will be explained below in detail below.

### (Luminescent particles)

The luminescent particles which can preferably be used in the invention are, specifically, particles of a semiconductor comprising one or more elements selected from the group consisting of the Group II elements and the Group VI elements and one or more elements selected from the group consisting of the Group III elements and the Group V elements and are selected at will according to the necessary luminescence wavelength region. Examples thereof include CdS, CdSe, CdTe, ZnS, ZnSe, ZnTe, CaS, SrS, GaP, GaAs, etc. Of these, ZnS, CdS, CaS, etc. are preferably used.

Luminescent particles in the invention can be formed by the burning method (solid-phase process) in extensive use in this field. For example, in the case where zinc sulfide is used, luminescent particles can be produced in the following manner. Fine particles having a size of from 10 to 50 nm (usually called a raw powder) are formed by a liquid-phase process. These fine particles are used as primary particles, that is, mother substance. As zinc sulfide, there are two crystal systems of a hexagonal crystal system stable at a high temperature and a cubic crystal system stable at a low temperature, both of which may be used independently or as a mixture. Zinc sulfide is subjected to burning together with an impurity called an activator or a co-activator and a fluxing agent in a crucible at a temperature as high as 900-1, 300 °C for from 30 minutes to 10 hours to obtain intermediate luminescent particles. The burning temperature preferred for obtaining the luminescent particles having the size and the coefficient of variation as in the invention is from 950°C to 1,250°C, more preferably from 1,000°C to 1,200°C. Also, the burning time is preferably from 30 minutes to 6 hours, more preferably from 1 hour to 4 hours. Also, the fluxing agent is used in an amount of preferably 40% by weight or more, more preferably 50% by weight or more, still more preferably 55% by weight or more. The ratio of the fluxing agent (% by weight) is shown in terms of the weight of the fluxing agent/(the weight of primary particles of the starting luminescent particles + the weight of the fluxing agent). For example, in the case of previously mixing an activator of copper into the raw powder as with the copper-activated zinc sulfide fluorescent particles to be described hereinafter, the activator of copper is integrated with the raw luminescent particles. In such cases, the weight of copper is included in the weight of the raw luminescent particles.

In some cases, the weight of the fluxing agent at a room temperature can be different from that at a burning temperature. For example, it is considered that barium chloride exists in the form of BaCl₂•2H₂O at a room temperature but, at a burning temperature, the hydrating water is lost to form BaCl₂. However, the ratio of the fluxing agent as used herein is calculated based on the weight of the fluxing agent in a stable state at a room temperature.

Further, the intermediate luminescent particles obtained by the above-mentioned burning are preferably washed with ion-exchanged water to remove the excess activator, co-activator and fluxing agent.

Naturally generated two-dimensional stacking fault (twin structure) exists within the intermediate luminescent particles obtained by burning. The density of the stacking fault can largely be increased without destroying the particles by applying thereto an impact force within a certain range. As a method for applying an impact force, there have conventionally been known a method in which the intermediate luminescent particles are contacted/mixed with one another; a method in which the intermediate luminescent particles are mixed together with spheres of, e.g., alumina (ball mill method); and a method in which the particles are caused to collide at an accelerated speed. Particularly with zinc sulfide, there exist two crystal systems of a cubic crystal system and a cubic crystal system. In the former, the closest atomic plane ((111) plane) constitutes a three-layer structure of ABCABC••• whereas, in the latter, the closest atomic plane vertical to c-axis constitutes a two-layer structure of ABAB•••. Therefore, when an impact is applied to zinc sulfide crystals in a ball mill or the like, sliding of atomic plane occurs in the cubic crystal system and, when the C-plane disappears, the cubic crystal system is partially converted to the ABAB hexagonal system to cause edge dislocation with the position of the A-plane and the B-plane being reversed in some cases to generate twins. Generally, impurities in the crystals concentrate in the crystal lattice defect portions. Therefore, when zinc sulfide having stacking fault is heated to diffuse therethrough an activator such as copper sulfide, the activator precipitates at the stacking fault. The interface between the precipitated activator and the matrix of zinc sulfide functions as a center of electroluminescent particles, and hence, in the invention, too, it is preferred for the density of the stacking fault to be high for the purpose of improving luminance.

Subsequently, the intermediate luminescent particles obtained are subjected to second burning. In this second burning, the intermediate is heated (annealed) at a lower temperature of 500-800°C for a shorter period of from 30 minutes to 3 hours than in the first burning. Through this burning operation, the activator can be thickly precipitated on the stacking faults.
Thereafter, the intermediate luminescent particles are etched with an acid such as hydrochloric acid to remove metal oxides adhering to the surface thereof and, further, copper sulfide adhering to the surface is removed by washing with KCN or the like. Subsequently, the particles are dried to obtain electroluminescent particles.
By such method, there can be obtained particles having a size of from 1 µm to less than 20 µm and a coefficient of variation of from 3% to less than 35%.

As other methods which can be used for forming luminescent particles, there can be employed vapor-phase processes such as the laser ablation method, CVD method, plasma method, sputtering, resistance heating, electron beam method, and a combination of any of these with fluidized-oil-surface vapor deposition, liquid-phase processes such as the double-decomposition method, method based on precursor pyrolysis reaction, reverse micelle method, method comprising a combination of any of these methods with high-temperature burning, and freeze drying method and, further, the molten urea method, the spray pyrolysis method, and the like.

The average size and the coefficient of variation of the luminescent particles of the invention can be determined by employing a method utilizing laser diffusion, such as a laser diffraction/diffusion particle-size-distribution-analyzer, LA-920, manufactured by Horiba, Ltd. The term "average particle size" as used herein means a median size.

Also, it is preferred for the luminescent particles of the invention to be zinc sulfide containing copper as an activator and contain at least one of the metal elements belonging to the second transitional series of from group 6 to group 10. Of them, molybdenum and platinum are preferred. These metals are contained in zinc sulfide in an amount of preferably from 1x10⁻⁷ mol to 1x10⁻³ mol, more preferably from 1x10⁻⁶ mol to 5x10⁻⁴ mol. These metals are preferably incorporated in zinc sulfide fine particles by adding them to deionized water together with zinc sulfide fine powder and a predetermined amount of copper sulfate, well mixing in a slurry state, drying, and burning the mixture together with a co-activator and a fluxing agent. It is also preferred to mix a complex powder containing these metals with the fluxing agent and conduct burning using the co-activator and the fluxing agent to thereby incorporate them in the zinc sulfide particles. In both cases, any compound containing a metal element to be used can be used as the starting compound upon addition of the metal, but use of a complex wherein oxygen or nitrogen coordinates to a metal or a metal ion is preferred. As ligands, inorganic compounds and organic compounds may be used. Use of them permits to more improve luminance and provide a prolonged life.

It is more preferred that the luminescent particles have a non-luminescent shell layer on the surface of the particles. This shell layer preferably is formed in a thickness of 0. 01 µm or larger by a chemical method subsequently to the preparation of fine particles serving as the cores of luminescent particles. The thickness of the shell layer is preferably from 0.01 µm to 1.0 µm. The non-luminescent shell layer can be made of an oxide, nitride, or oxy-nitride or a material having the same composition as the luminescent-particle base, except that the material has no luminescence center. Alternatively, the shell layer can be formed by epitaxially growing a material having a different composition on the luminescent-particle base material.

Methods which can be used for forming a non-luminescent shell layer include vapor-phase processes such as a method comprising a combination of any of the laser ablation method, CVD method, plasma method, sputtering, resistance heating, electron beam method, and the like with fluidized-oil-surface vapor deposition; liquid-phase processes such as the double-decomposition method, sol-gel method, ultrasonic chemical method, method based on precursor pyrolysis reaction, reverse micelle method, combinations of any of these methods with high-temperature burning, molten urea method, and freeze drying method; and the spray pyrolysis method.

In particular, the molten urea method and the spray pyrolysis method which are preferably used for formation of the luminescent particles are also adequate for synthesis of the non-luminescent shell layer.
For example, in the case where a non-luminescent shell layer is to be deposited on the surface of the luminescent particles of zinc sulfide, the luminescent zinc sulfide particles are added to a molten urea solution containing dissolved therein a salt of a. metal becoming a non-luminescent shell layer material. Since zinc sulfide does not dissolve in urea, the solution is heated as in the formation of the particles to thereby obtain a solid comprising a urea-derived resin and, evenly dispersed therein, luminescent zinc sulfide particles and a non-luminescent shell layer material. This solid is finely pulverized and then burned in an electric furnace while pyrolyzing the resin. An inert atmosphere, oxidizing atmosphere, reducing atmosphere, ammonia atmosphere, or vacuum atmosphere is selected as an atmosphere for the burning, whereby luminescent zinc sulfide particles having on the surface thereof a non-luminescent shell layer comprising an oxide, sulfide, or nitride can be synthesized.
Furthermore, for example, in the case where the spray pyrolysis method is used for depositing a non-luminescent shell layer on the surface of luminescent zinc sulfide particles, the luminescent zinc sulfide particles are added to a solution containing dissolved therein a salt of a metal becoming a non-luminescent shell layer material. This solution is atomized and pyrolyzed to thereby yield a non-luminescent shell layer on the surface of the luminescent zinc sulfide particles. By selecting an atmosphere for the pyrolysis and an atmosphere for additional burning, luminescent zinc sulfide particles having on the surface thereof a non-luminescent shell layer comprising an oxide, sulfide, or nitride can be synthesized.

### (Luminescent layer)

When these luminescent particles are used to produce an EL element, the particles are dispersed in an organic dispersion medium and this dispersion is applied to form a luminescent layer.
As the organic dispersion medium can be used an organic polymeric material or an organic solvent having a high boiling point. It is, however, preferred to use an organic binder constituted mainly of one or more organic polymeric materials.
The organic binder desirably is a material having a high permittivity. Examples thereof include a fluorine-containing polymeric compound (e.g., a polymeric compound comprising monomer units derived from fluoroethylene and trifluoromonochloroethylene) and a polysaccharide, poly(vinyl alcohol), or phenolic resin in which the hydroxyl groups have been cyanoethylated. The organic binder preferably comprises all or part of these polymers.
The proportion of such a binder to the luminescent particles is such that the content of the luminescent particles in the luminescent layer is preferably from 30 to 90% by weight, more preferably from 60 to 85% by weight, based on all solid components, whereby the surface of the luminescent layer can be made smooth.
It is especially preferred that a polymeric compound in which hydroxyl groups have been cyanoethylated be used as a binder in an amount of at least 20% by weight, more preferably at least 50% by weight, based on the organic dispersion medium of the whole luminescent layer.

The thickness of the luminescent layer thus obtained is preferably from 30 µm to less than 80 µm, more preferably from 35 µm to less than 75 µm. When the thickness is 30 µm or more, the surface of the luminescent layer can have a good smoothness and, when less than 80 µm, an effective electric field can be applied to the luminescent particles, thus such thickness being preferred. In particular, in the case of providing the barrier layer of the invention, reduction of the initial luminance can be compensated by reducing the thickness of the insulating layer and increasing the thickness of the luminescent layer, whereby a sufficient durability can be obtained. Thus, such thickness is preferred. Further, in order to obtain a good initial luminance, the thickness of the luminescent layer is preferably 70 µm or less.

### (Barrier layer)

A large characteristic feature of the EL element of the invention is that at least one barrier layer containing at least one material selected from the group consisting of a thermoplastic resin, a thermoset resin and a Ultraviolet-cured resin is disposed between a transparent electrode and a luminescent layer.
The thickness of the barrier layer is preferably from 0.01 µm to less than 10 µm, more preferably from 0.02 µm to less than 8 µm, particularly preferably from 0.05 µm to less than 7 µm. When the thickness of the barrier layer is 0.01 µm or more, there can be obtained a sufficient durability-improving effect and, when the thickness of the barrier layer is less than 10 µm, an effective electric field can be applied to the luminescent particles whereby good luminescent efficiency can be obtained, thus such thickness being preferred. In particular, a barrier layer having a smaller thickness can more suppress reduction of initial luminance and can provide a sufficient durability-improving effect, thus being preferred.

As a material for forming the barrier layer, at least one material selected from the group consisting of a thermoplastic resin, a thermoset resin and a Ultraviolet-cured resin is incorporated. Examples of the thermoplastic resin include polystyrene resin, acrylic resin, styrene-(meth)acrylic ester copolymer, vinyl chloride resin, ethylene-vinyl acetate copolymer, rosin-modified maleic acid resin, phenol resin, epoxy resin, polyester resin, low-molecular-weight polystyrene, low-molecular-weight polypropylene, ionomer resin, polyurethane resin, silicone resin, ketone resin, xylene resin and polyvinyl butyral resin. Thermoset resins obtained from epoxy compounds or cyanate compounds and Ultraviolet-cured resins obtained from polyfunctional acrylic ester compounds can also be preferably used. The organic polymeric compounds to be used may be insulators or conductors. In particular, it is preferred to incorporate at least one organic polymeric compound having a high softening point of, specifically, 120 °C or higher, more preferably 140°C or higher, most preferably 170°C or higher. When the softening point is 120°C or higher, a durability-improving effect can be obtained even by a barrier layer having a smaller thickness.

With respect to these softening points, reference may be made to, e.g., Polymer Handbook, 3rd ed., Wiley-Interscience, Chapter VI "Glass Transition Point".
Of these, preferred polymers having a high softening point are as follows. Preferred examples of the polyesters include polyesters formed from bisphenol A, terephthalic acid, and isophthalic acid (e.g., U-Polymer, manufactured by Unichika, Ltd.) and polyesters formed from 4,4'-(3,3,5-trimethylcycZohexylidene)bisphenol, bisphenol A, terephthalic acid, and isophthalic acid.
Preferred examples of the polycarbonates include polycarbonates of 4,4'-(3,3,5-trimethylcyclohexylidene)bisphenol and bisphenol A and polycarbonates of 4,4'-(3,3,5,5-tetramethylcyclohexylidene)bisphenol and bisphenol A.
Preferred examples of the polyamides include polyacrylamide and poly(t-butylmethacrylamide).

Preferred examples of the ultraviolet-cured resins include ones obtained by crosslinking/polymerizing dipentaerythritol hexaacrylate.
Preferred examples of the thermoset resins include ones obtained by polymerizing cyanate compounds (e.g., PRIMASET PT-60, manufactured by Lonza Ltd.)
Of these, the polyesters, polycarbonates, and polyethersulfones which each have a softening point of 200°C or higher are preferred.

In the above-described barrier layer, the organic polymeric compounds are used in an amount of preferably 20% or more by volume (proportion based on the solid components of the barrier layer) of the materials constituting the barrier layer, more preferably 50% or more, most preferably 70% or more, whereby the barrier layer of the invention can exerts its effect more effectively.
Other compounds which the barrier layer may contain include, specifically, particles of simple metal, metal oxide, metal chloride, metal nitride, metal sulfide, etc. They can be incorporated within a range of not substantially spoiling transparency. For example, there are illustrated particles of Au, Ag, Pd, Pt, Ir, Rh, Ru, Cu, SnO₂, In₂O₃, Sn-doped In₂O₃, TiO₂, BaTiO₃, SrTiO₃, Y₂O₃, Al₂O₃, ZrO₂, PdCl₂, AlON, ZnS, etc. and particles of silica gel or alumina. Also, other organic polymeric compounds can be used with no particular limitation. It is preferred that the interlayer be substantially transparent. The term "substantially transparent" herein means that the transmittances measured respectively at 450 nm, 550 nm, and 610 nm each are 50% or higher. Further, dyes, fluorescent dyes, fluorescent pigments, transparent organic particles or luminescent particles not spoiling the effects of the invention (30% or less of the luminance of the whole EL element) may be allowed to exist.

These organic polymeric compounds or the precursors thereof can be dissolved in a suitable organic solvent (e.g., dichloromethane, chloroform, acetone, methyl ethyl ketone, cyclohexanone, acetonitrile, dimethylformamide, dimethylacetamide, dimethyl sulfoxide, toluene or xylene) and coated on a transparent electrode or a luminescent layer to form the layer.

The barrier layer may also be preferably constituted by a combination of an inorganic compound thin film layer and a layer of a polymeric compound. As the inorganic compound, there are illustrated simple metals, silicon dioxide and other metal oxides, metal nitrides, etc. As a method for forming the inorganic compound thin layer, a sputtering method, a CVD method or the like can be employed. In the case where the barrier layer is formed by a combination of two layers of the inorganic compound thin layer and the organic polymeric compound layer, the thickness of the inorganic compound thin layer is preferably from 10 nm to 1 µm, more preferably from 10 nm to 200 nm.
Since the barrier layer breaks contact between the luminescent particles and the transparent electrode, the barrier layer exerts the effect that deterioration of the interface between the luminescent particles and the transparent electrode, which occurs when generation of luminescence is continued for a long time by applying a voltage, can markedly be suppressed. As a result, a high durability can be attained with maintaining a high luminance and a high efficiency. In particular, a high durability can be attained under the conditions of generating luminescence with a high luminance (800 Hz or more in frequency and 100 V or more in voltage).

### (Insulating layer)

For the insulating layer of the invention, any material can be used that has a high permittivity and high insulating properties, and a high dielectric breakdown voltage. This material is selected from metal oxides and nitrides. Examples thereof include BaTiO₃, KNbO₃, LiTaO₃, Ta₂O₃, BaTa₂O₆, Y₂O₃, Al₂O₃, AlON, and the like. These materials may be deposited as a uniform film or as a film having a particulate structure containing an organic binder. For example, as is described in Mat. Res. Bull. 36, p.1065, a film constituted by BaTiO₃ fine particles and BaTiO₃ sol, and the like can be used.
The thickness of the layer is desirably from 8 µm to less than 30 µm, more preferably from 10 µm to less than 28 µm, still more preferably from 12 µm to less than 25 µm. When the thickness of the layer is too small, dielectric breakdown is liable to occur whereas, when the thickness is too large, the voltage applied to the luminescent layer becomes so small that luminescence-generating efficiency is decreased, thus such thickness not being preferred. In view of durability-improving effect, the thickness of the insulating layer is preferably 10 µm or more and, in view of initial luminance, the thickness of the insulating layer is preferably 10 µm or less.

As the organic binder to be used in the insulating layer, there are illustrated polymers having a comparatively high permittivity, such as cyanoethyl cellulose series resins, and resins such as polyethylene, polypropylene, polystyrene series resins, silicone resin, epoxy resin, vinylidene fluoride resin, etc. These resins may appropriately be mixed with fine particles having a high permittivity such as BaTiO₃ and SrTiO₃ to adjust permittivity. As a dispersing method, a homogenizer, a planetary kneader, a roll kneader, an ultrasonic dispersing machine, etc. can be used.

### (Red fluorescent dye layer)

In the electroluminescent element of the invention, a luminescent material which generates a red luminescence is used in addition to the zinc sulfide particles which generate a bluish green luminescence in order to generate white luminescence. The material generating a red luminescence may be dispersed in the luminescent-particle-containing layer or in the insulating layer or, further, may be positioned between the luminescent-particle-containing layer and the transparent electrode or on the opposite side to the luminescent-particle-containing layer with respect to the transparent electrode.

In the electroluminescent element of the invention, the luminescent wavelength of red luminescence upon generating a white luminescence is preferably from 600 nm to 650 nm. In order to obtain a red luminescence in this wavelength region, the red luminescence-generating material may be incorporated in the luminescent layer or between the luminescent layer and the transparent electrode, or on the opposite side to the luminescent layer with respect to the transparent electrode. Most preferably, however, it is incorporated in the insulating layer. Regarding the insulating layer containing the red luminescence-generating material, the whole insulating layer in the electroluminescent element of the invention may preferably contain the red luminescence-generating material and, more preferably, the insulating layer in the element is divided into two or more layers, with part of them containing the red luminescence-generating material. The layer containing the luminescence-generating material is preferably positioned between an insulating layer not containing the red luminescence-generating material and a luminescent layer, and it is also preferred to sandwich by insulating layers not containing the red luminescence-generating material.

In the case where the layer containing the red luminescence-generating material is sandwiched between an insulating layer not containing the red luminescence-generating material and a luminescent layer, the thickness of the layer containing the red luminescence-generating material is preferably from 1 µm to 20 µm, more preferably from 3 µm to 17 µm. The concentration of the red luminescence-generating material in the insulating layer is preferably from 1% by weight to 20% by weight, more preferably from 3% by weight to 15% by weight, based on the dielectric particles represented by BaTiO₃. In the case where the layer containing the red luminescence-generating material is sandwiched by insulating layers not containing the red luminescence-generating material, the thickness of the layer containing the red luminescence-generating material is preferably from 1 µm to 20 µm, more preferably from 3 µm to 10 µm. The concentration of the red luminescence-generating material in the insulating layer is preferably from 1% by weight to 30% by weight, more preferably from 3% by weight to 20% by weight, based on the dielectric particles. In the case where the layer containing the red luminescence-generating material is sandwiched by insulating layers not containing the red luminescence-generating material, it is also preferred that dielectric particles be not contained in the layer containing the red luminescence-generating and that the layer be a layer of only the binder having a high permittivity and the red luminescence-generating material.

The red luminescence-generating material to be used here generates a luminescence of preferably from 600 nm to 750 nm, more preferably from 610 nm to 650 nm, most preferably from 610 nm to 630 nm, when it is in a powdery state. As a wavelength of a red luminescence generated upon generation of electroluminescence by an electroluminescent element to which the luminescent material has been added, a wavelength of from 600 nm to 650 nm is preferred, a wavelength of from 605 nm to 630 nm is more preferred, and a wavelength of from 608 nm to 620 nm is most preferred, as has been described hereinbefore.

As a binder for the layer containing the red luminescence-generating material, polymers having a comparatively high permittivity, such as cyanoethyl cellulose series resins, and resins such as polyethylene, polypropylene, polystyrene series resins, silicone resin, epoxy resin, vinylidene fluoride resin, etc. are preferred.

As the red luminescence-generating material, fluorescent pigments or fluorescent dyes can preferably be used. As the compounds constituting the luminescent center thereof, compounds having, as a skeleton, rhodamine, lactone, xanthene, quinoline, benzothiazole, triethylindoline, perylene, triphennine or dicyanomethylene are preferred. Besides, use of cyanine dyes, azo dyes, polyphenylenevinylene series polymers, disilane-oligothienylene series polymers, ruthenium complexes and europium complexes is also preferred. These compounds may be used independently or in combination of two or more thereof. Further, these compounds may be used after dispersing in a polymer or the like.

### (Transparent Electrode)

The transparent electrode can be obtained by evenly depositing a film of a transparent electroconductive material such as indium-tin oxide (ITO), tin oxide, antimony-doped tin oxide, zinc-doped tin oxide, or zinc oxide on a glass substrate or on a transparent film such as a poly(ethylene terephthalate) or triacetylcellulose base by a technique such as vapor deposition, coating fluid application, or printing.
Use may be made of a multilayer structure comprising high-refractive-index layers and a thin silver layer sandwiched between these. Furthermore, an electroconductive polymer such as a conjugated polymer, e.g., polyaniline or polypyrrole, can be advantageously used.
These transparent electroconductive materials are described in, e.g., Denjiha Shîrudo Zairyô No Genjô To Shôrai, published by Toray Research Center and JP-A-9-147639.

It is also preferred to use as the transparent electrode a transparent electroconductive sheet obtained by improving the electrical conductivity of either a transparent electroconductive sheet obtained by depositing a film of any of those transparent electroconductive materials on the transparent film or a conductive polymer by disposing a thin-line structure part comprising thin lines of a metal and/or alloy evenly formed in, e.g., a net, comb, or grid arrangement and thereby forming an electroconductive surface.

In the case where such thin lines also are used, the material of the thin lines of metal or alloy preferably is copper, silver, nickel or aluminum. According to purposes, however, the transparent electroconductive materials enumerated above may be used in place of metals or alloys. A material having high electrical conductivity and high thermal conductivity is preferred. Although the width of the thin lines is not particularly limited, it is preferably in the range of from about 0.1 µm to 1,000 µm. It is preferred that the thin lines have been disposed at a pitch of from 50 µm to 5 cm, especially from 100 µm to 1 cm.
The height (thickness) of the thin-line structure part is preferably from 0.1 µm to 10 µm, especially preferably from 0.5 µm to 5 µm. Either of the thin-line structure part and the transparent electroconductive film may be exposed on the surface. In either case, however, the electroconductive surface preferably has a smoothness (roughness) of 5 µm or less. From the standpoint of adhesion, the surface smoothness is preferably from 0.01 µm to 5 µm, especially preferably from 0.05 µm to 3 µm.

The value of the smoothness (roughness) of the electroconductive surface herein indicates the average amplitude of recesses and protrusions in a measurement along the periphery of a 5-mm square with a three-dimensional surface roughness meter (e.g., SURFCOM 575A-3DF, manufactured by Tokyo Seimitsu Co., Ltd.). In the case of electroconductive surfaces whose surface smoothness is beyond the resolving power of the surface roughness meter, the surface smoothness thereof is determined through an examination with an STM or electron microscope.
With respect to the relationships among the width, height, and pitch of the thin lines, the width of each thin line is typically preferably from 1/10, 000 to 1/10 the pitch of the thin lines although it may be determined according to purposes.
The same applies to the height of the thin lines. Namely, the height thereof is preferably in the range of from 1/100 to 10 times the width of each thin line.

The surface resistivity of the transparent electrode to be used in the invention is preferably from 0.1 Ω/□ to 100 Ω/□, more preferably from 1 Ω/□ to 80 Ω/□. The surface resistivity of the transparent electrode is a value measured by the measuring method as provided for in JIS K6911.

In the case where the transparent electrode is one in which a thin-line structure part comprising a metal and/or an alloy has been disposed, it is preferred to inhibit light transmittance from decreasing. It is preferred to secure a light transmittance of 90% or higher by regulating the pitch of the thin lines and the width and height of each thin line so as to be within the respective ranges shown above.
In the invention, the transparent electrode has a light transmittance of preferably 70% or higher, more preferably 80% or higher, most preferably 90% or more, with respect to the transmission of 550-nm light.

From the standpoints of improving luminance and realizing white luminescence, it is preferred that the transparent electrode should transmit at least 80%, more preferably at least 90%, of a light having wavelengths in the range of from 420 nm to 650 nm. From the standpoint of realizing white luminescence, it is more preferred that the transparent electrode should transmit at least 80% of a light having wavelengths in the range of from 380 nm to 680 nm. The light transmittance of the transparent electrode can be measure with a spectrophotometer.

### (Back Electrode)

For the back electrode which is on the side from which luminescence is not emitted, any material can be used that has electrical conductivity. An electroconductive material is suitably selected frommetals such as gold, silver, platinum, copper, iron, and aluminum, graphite, and the like according to the type of the element to be produced, the temperatures to be used in production steps, etc. A transparent electrode, e.g., ITO, may be used as long as it has electrical conductivity. Furthermore, from the standpoint of improving durability, it is important that the back electrode should have a high thermal conductivity. The thermal conductivity thereof is preferably 2.0 W/cm·deg or higher, especially preferably 2.5 W/cm·deg or higher.
It is also preferred to employ a metal sheet or metal mesh as the back electrode in order to secure high heat dissipation and electrical conductivity around the EL element.

### (Production Process)

In producing the EL element of the invention, it is preferred that the luminescent layer, insulating layer, and barrier each be formed by spin coating, dip coating, bar coating, spray coating, or the like by applying a coating fluid prepared by dissolving constituent materials in a solvent. It is especially preferred to use a printing technique usable for printing on various surfaces, such as screen printing, or a technique with which continuous application is possible, such as slide coating. For example, in screen printing, a dispersion prepared by dispersing luminescent particles or fine dielectric material particles in a solution of a polymer having a high permittivity is applied through a screen mesh. The thickness of the coating film can be regulated by selecting the thickness and percentage of openings of the mesh and the number of coating operations. By replacing the dispersion, a back electrode layer and other layers can be formed besides the luminescent layer and the insulating layer. Furthermore, an EL element having an increased area can be easily produced by changing the size of the screen.

For application by such a coating operation, the constituent materials for the luminescent layer, insulating layer, or barrier layer are preferably formulated into a coating fluid by adding an appropriate organic solvent thereto. Examples of the organic solvent to be preferably used include dichloromethane, chloroform, acetone, acetonitrile, methyl ethyl ketone, cyclohexanone, dimethylformamide, dimethylacetamide, dimethyl sulfoxide, toluene, and xylene.

The viscosity of the coating fluid is preferably from 0.1 to 5 Pa·s, especially preferably from 0.3 to 1.0 Pa.s. When the coating fluid for forming a luminescent layer or the coating fluid for forming an insulating layer containing dielectric particles has a viscosity lower than 0.1 Pa·s, the coating fluid is apt to give a coating film having thickness unevenness and there are cases where the luminescent particles or dielectric particles separate out and sediment with the lapse of time after dispersion. On the other hand, in case where the viscosity of the coating fluid for forming a luminescent layer or of the coating fluid for forming an insulating layer exceeds 5 Pa·s, it is difficult to apply the coating fluid at relatively high rates. The viscosity values are ones measured at 16°C, which is the same as the application temperature to be used.

It is especially preferred that the luminescent layer be formed by continuously applying the coating fluid with a slide coater, extrusion coater, or the like in a coating film thickness of from 5 µm to 50 µm on a dry basis.

In forming each functional layer on a support through coating fluid application, it is preferred that at least the steps ranging from application to drying be conducted continuously. The drying step is divided into a constant-drying-rate step in which the coating film is dried until it solidifies and a falling-drying-rate step in which the solvent remaining in the coating film is diminished. In the invention, since each functional layer has a high binder content, rapid drying tends to result in the drying of a surface layer only and cause convection currents within the coating film. This is apt to result in the so-called Benard cells. In addition, abrupt swelling of the solvent is apt to occur to cause blistering troubles. Thus, the resultant coating film has considerably impaired evenness. Conversely, in case where the temperature of final drying is too low, the solvent partly remains in each functional layer and this produces an adverse influence on a step to be conducted later in EL element production, such as the step of laminating a moistureproof film. Consequently, the drying step is preferably conducted in such a manner that the constant-drying-rate step is performed gently and the falling-drying-rate step is performed at a temperature sufficient for solvent removal. A preferred method for gently performing the constant-drying-rate step is to partition the drying chamber through which the support runs into several zones and to increase the drying temperature by stages after completion of the application step.

### (Sealing)

It is preferred that the dispersion type EL element of the invention be finally processed with a sealing film so as to exclude influences of the moisture or oxygen present in the surrounding environment. The sealing film to be used for sealing the EL element is one whose moisture permeability as measured at 40°C and 90% RH is preferably 0.1 g/m²/day or lower, more preferably 0.05 g/m²/day or lower. Furthermore, the oxygen permeability thereof as measured at 40°C and 90% RH is preferably 0.1 cm³/m²/day/atm or lower, more preferably 0.01 cm³/m²/day/atm or lower.

A preferred sealing film having such properties is a layered film which comprises an organic film and an inorganic film. Preferably used as the organic film are polyethylene resins, polypropylene resins, polycarbonate resins, poly(vinyl alcohol) resins, and the like. In particular, poly(vinyl alcohol) resins can more preferably be used. Since poly (vinyl alcohol) resins and the like have water-absorbing properties, these resins are preferably used after having been brought into an absolute dry state by a treatment such as heating under vacuum. Any of those resins is formed into a sheet by a technique such as coating, and an inorganic film is deposited on this sheet by vapor deposition, sputtering, CVD, or the like. Preferably used as the inorganic film to be deposited are silicon oxide, silicon nitride, silicon oxy-nitride, silicon oxide/aluminum oxide, aluminum nitride, and the like. In particular, silicon oxide is more preferably used. For obtaining a lower moisture permeability and a lower oxygen permeability and for preventing the inorganic film from cracking upon bending, etc., it is preferred to employ a multilayer film obtained by repeatedly conducting the formation of an organic film and an inorganic film or by laminating through an adhesive layer two or more organic films each having an inorganic film deposited thereon. The thickness of the organic film is preferably from 5 to 300 µm, more preferably from 10 to 200 µm. The thickness of the inorganic film is preferably from 10 to 300 nm, more preferably from 20 to 200 nm. The thickness of the layered sealing film is preferably from 30 to 1,000 µm, more preferably from 50 to 300 µm. In the case where a sealing film having a moisture permeability of, for example, 0.05 g/m²/day or lower at 40°C and 90% RH is to be obtained, a film thickness of from 50 to 100 µm suffices for the constitution composed of superposed layers comprising two layers of the organic film described above and two layers of the inorganic film described above. In contrast, poly(chloratrifluoroethylene), which has been used as sealing films, is required to have a film thickness of 200 µm or larger. Smaller thicknesses of the sealing film are preferred from the standpoints of light transmission and the flexibility of the element.

In the case where an EL cell is sealed with this sealing film, use may be made of a method in which the EL cell is sandwiched between two sheets of the sealing film and the peripheral part surrounding the cell is bonded for sealing. Alternatively, a method may be used in which one sheet of the sealing film is folded double and the overlapped part is bonded for sealing. The EL cell to be sealed with the sealing film may be one which alone has been separately produced. Alternatively, use may be made of a method in which the sealing film is used as a support and an EL cell is produced directly on this sealing film.

When a sealing film having a high moisture permeability and a high oxygen permeability is used, moisture and oxygen can be prevented from permeating the sealing film to reach the EL cell. In this case, however, the penetration of moisture and oxygen through the parts where the sealing film has been bonded to itself poses a problem. A drying-agent layer is hence desirably disposed around the EL cell. Preferred examples of the drying agent for use in the drying-agent layer include the oxides of alkaline earth metals, such as CaO, SrO, and BaO, aluminum oxide, zeolites, activated carbon, silica gel, paper, and highly hygroscopic resins. In particular, the oxides of alkaline earth metals are more preferred from the standpoint of hygroscopicity. Such moisture absorbents may be used in the form of a powder. It is, however, preferred to dispose a drying-agent layer formed by mixing any of those moisture absorbers with a resin material and forming the resultant mixture into a sheet by coating fluid application, molding, etc., or by a method in which a coating fluid prepared by mixing with a resin material is applied with, e.g., a dispenser to a peripheral part surrounding the EL cell. It is more preferred to cover not only the peripheral part surrounding the EL element but also the upper and lower sides of the EL cell with a drying agent. In this case, it is preferred to select a highly transparent drying-agent layer for use on the light takeout side. As the highly transparent drying-agent layer can be used a polyamide resin or the like.

For the bonding of a sealing film to itself, a hot-melt adhesive or a Ultraviolet-cured adhesive is preferably used. Especially from the standpoints of water permeability and workability, a Ultraviolet-cured adhesive is more preferred. As the hot-melt adhesive can be used, for example, a polyolefin resin. As the Ultraviolet-cured adhesive can be used, for example, an epoxy resin. In bonding a sealing film to itself, use may be made of a method which comprises applying an adhesive over the whole surface of the sealing film, disposing the EL cell and a drying-agent layer thereon, and then bonding the film to itself and curing the adhesive by heating or UV irradiation. Alternatively, use may be made of a method which comprises disposing the EL cell and a drying-agent layer on the sealing film, applying an adhesive to the region where the sealing film overlaps itself, and curing the adhesive.

The bonding of a sealing film can be conducted by a method in which the film is heated or irradiated with UV while applying a pressure thereto with a pressing machine or the like. It is, however, preferred that during the bonding operation, the inside of the sealing film or the sealing apparatus be kept vacuum or being filled with an inert gas having a controlled dew point, because this improves the life of the EL element.

### (Applications)

Applications of the invention are not particularly limited. However, for use as a light source, the luminescence color of the EL element preferably is white. Preferred methods for obtaining white luminescence are: a method in which luminescent particles which by themselves emit white light, such as luminescent zinc sulfide particles which have been activated with copper and manganese and have undergone gradual cooling after burning, are used; and a method in which luminescent particulate materials respectively emitting lights of the three primary colors or complementary colors are mixed together (e.g., a combination of blue/green/red or a combination of blue-green/orange). Also preferred is a method in which a light having short wavelengths, such as blue light, is emitted and part of this luminescence is subjected to wavelength conversion to a green or red color (luminescence) with a fluorescent pigment or fluorescent dye to thereby obtain white luminescence, as described in JP-A-7-166161, JP-A-9-245511, and JP-A-2002-62530. When the color of the luminescence is expressed in terms of the CIE chromaticity coordinates (x, y), then the value of x is preferably in the range of from 0.30 to 0.43 and the value of y is preferably in the range of from 0.27 to 0.41.

The invention is effective especially in applications in which the electroluminescent element is caused to luminesce at a high luminance (e.g., 600 cd/m² or higher). Specifically, the invention is effective when the electroluminescent element is used under operating conditions in which a voltage of from 100 V to 500 V is applied across the transparent electrode and the back electrode or under such conditions that the element is operated with an AC power source having a frequency of from 800 Hz to 4,000 kHz.

### (Examples)

Examples of the dispersion type EL cells of the invention are shown below, but the dispersion type electroluminescent elements of the invention should not be construed as being limited to the following Examples.

### (Example 1)

The first layer and second layer shown below were formed in this order on an aluminum electrode (back electrode) having a thickness of 70 µm, by applying respective coating fluids for layer formation. Furthermore, a poly(ethylene terephthalate) film (thickness, 75 µm) on which indium-tin oxide had been deposited by sputtering so as to form a transparent electrode having a thickness of 40 nm was press-bonded to the coated aluminum electrode with a 190°C heated roller in a nitrogen atmosphere so that the transparent electrode side (electroconductive side) faced the aluminum electrode and the transparent electrode was adjacent to the luminescent-particle-containing layer as the second layer.

The ingredient amounts for each layer shown below indicate the amounts by weight per square meter of the EL element.
Each layer was formed by adding dimethylformamide to the ingredients to prepare a coating fluid having a regulated viscosity, applying the coating fluid, and then drying the coating film at 110°C for 10 hours.

| | | |
|---|---|---|
| First Layer; | Insulating layer (without a red dye layer) Cyanoethylpullulan | 7.0 g |
| | Cyanoethylpoly(vinyl alcohol) | 5.0 g |
| | Barium titanate particles (average diameter of corresponding spheres, 0.05 µm) | 50.0 g |
| Second Layer; | Insulating layer (with a red dye layer) Cyanoethylpullulan | 7.0 g |
| | Cyanoethylpoly(vinyl alcohol) | 5.0 g |
| | Barium titanate particles (average diameter of corresponding spheres, 0.05 µm) | 50.0 g |
| | Fluorescent dye (having a luminescent peak at 620 nm) | 3.0 g |
| Third Layer; | Luminescent layer Cyanoethylpullulan | 18.0 g |
| | Cyanoethylpoly(vinyl alcohol) | 12.0 g |
| | Luminescent particles A | 120.0 g |

Production process and characteristic properties of luminescent particles A will be described below.
Water was added to ZnS (manufactured by Furuuchi Chemical Corporation; purity: 99.999%) to prepare a slurry, and an aqueous solution containing 0.416 g of CuSO₄•5H₂O and 0.0001 mol % of sodium chloroaurate based on Zinc were added thereto to thereby obtain ZnS raw particles (average particle size: 100 nm) partly substituted by Cu. To 25.0 g of the thus-obtained raw particles were added 4.2 g of BaCl₂•2H₂O, 11.2 g of MgCl₂•6H₂O and 9.0 g of SrCl₂•6H₂O, and burned at 1200°C for 4 hours to obtain a luminescent intermediate. The resulting particles was washed 10 times with deionized water, and dried. The thus-obtained intermediate was pulverized in a ball mill, and annealed at 70C for 4 hours.
The thus-obtained luminescent particles were washed with a 10% KCN aqueous solution to remove excess copper (copper sulfide) on the surface thereof, then washed 5 times with water to obtain luminescent particles A.

Further, luminescent particles B were obtained in the same manner as with the luminescent particles A except for changing the addition amounts of the fluxing agents to 2.1 g of BaCl₂•2H₂O, 6.8 g of MgCl₂•6H₂O and 37.1 g of SrCl₂•6H₂O and the burning conditions to 1200°C for 1 hour.
Still further, luminescent particles C were obtained in the same manner as with the luminescent particles A except for changing the addition amounts of the fluxing agents to 2.1 g of BaCl₂•2H₂O, 4.25 g of MgCl₂•6H₂O and 1.0 g of SrCl₂•6H₂O.
Yet further, luminescent particles D were obtained in the same manner as with the luminescent particles A except that part of BaCl₂•2H₂O was taken out before burning at 1200°C, and 12.5 mg of Na₂[Pt(OH)₆] was added per 25 g of the ZnS raw particles and, after well mixing, the resulting mixture was mixed with ZnS raw particles and other fluxing agents and burned at 1200°C.

**Table 1**

| | Average Size (µm) | Coefficient of Variation (%) |
|---|---|---|
| Luminescent particles A | 17 | 33 |
| Luminescent particles B | 14 | 30 |
| Luminescent particles C | 23 | 42 |
| Luminescent particles D (containing Pt) | 18 | 32 |

To the coated structure thus obtained, the film having a transparent electrode was press-bonded in the manner described above. An electrode terminal (aluminum plate having a thickness of 60 µm) was bonded to each of the aluminum electrode and the transparent electrode. Thereafter, the resultant structure was sealed with a sealing film (poly(chlorotrifluoroethylene); thickness, 200 µm) to obtain EL element 101.

Subsequently, EL elements 102 to 115 shown in Table 2 were produced in the same manner as for EL element 101, except that the constitution was modified by changing the contents of the second layer or newly disposing a barrier layer between the second layer and the transparent electrode.

EL element 102: The EL element was produced in the same manner as for EL element 101, except that a 1.0-µm thick barrier layer of a polycarbonate of bisphenol A and 4,4'-(3,3,5-trimethylcyclohexylidene)bisphenol (molar ratio: 2:1) was disposed between the transparent electrode and the luminescent layer.

EL element 103: The EL element was produced in the same manner as for EL element 101, except that luminescent particles B were used in place of the luminescent particles A, and that a 1.0-µm thick barrier layer of a polycarbonate of bisphenol A and 4,4'-(3,3,5-trimethylcyclohexylidene)bisphenol (molar ratio: 2:1) was disposed between the transparent electrode and the luminescent layer.

EL element 104: The EL element was produced in the same manner as for EL element 101, except that luminescent particles C were used in place of the luminescent particles A, and that a 1.0-µm thick barrier layer of a polycarbonate of bisphenol A and 4,4'-(3,3,5-trimethylcyclohexylidene)bisphenol (molar ratio: 2:1) was disposed between the transparent electrode and the luminescent layer.

EL element 105: The EL element was produced in the same manner as for EL element 101, except that a 1.0-µm thick barrier layer of a polycarbonate (manufactured by Teijin Chemicals Ltd.; TS-2020) was disposed between the transparent electrode and the luminescent layer.

EL element 106: The EL element was produced in the same manner as for EL element 101, except that a 1.0-µm thick barrier layer composed of a layer of a 3:1 by volume mixture of cyanoethylpullulan and a polycarbonate (manufactured by Teijin Chemicals Ltd.; TS-2020) was disposed between the transparent electrode and the luminescent layer.

EL element 107: The EL element was produced in the same manner as for EL element 101, except that a 1.0-µm thick barrier layer composed of a layer of a 9:1 by volume mixture of cyanoethylpullulan and a polycarbonate (manufactured by Teijin Chemicals Ltd.; TS-2020) was disposed between the transparent electrode and the luminescent layer.

EL element 108: The EL element was produced in the same manner as for EL element 101, except that a 0.5-µm thick barrier layer of a polycarbonate of bisphenol A and 4,4'-(3,3,5-trimethylcyclohexylidene)bisphenol (molar ratio: 2:1) was disposed between the transparent electrode and the luminescent layer.

EL element 109: The EL element was produced in the same manner as for EL element 101, except that a 5.0-µm thick barrier layer of a polycarbonate of bisphenol A and 4,4'-(3,3,5-trimethylcyclohexylidene)bisphenol (molar ratio: 2:1) was disposed between the transparent electrode and the luminescent layer.

EL element 110: The EL element was produced in the same manner as for EL element 101, except that a 15-µm thick barrier layer of a polycarbonate of bisphenol A and 4,4'-(3,3,5-trimethylcyclohexylidene)bisphenol (molar ratio: 2:1) was disposed between the transparent electrode and the luminescent layer.

EL element 111: The EL element was produced in the same manner as for EL element 101, except that a 1.0-µm thick barrier layer of a polycarbonate of bisphenol A and 4,4'-(3,3,5-trimethylcyclohexylidene)bisphenol (molar ratio: 2:1) was disposed between the transparent electrode and the luminescent layer and that conditions for coating two insulating layers were changed so as to coat in a total layer thickness of 20 µm.

EL element 112: The EL element was produced in the same manner as for EL element 101, except that a 1.0-µm thick barrier layer of a polycarbonate of bisphenol A and 4,4'-(3,3,5-trimethylcyclohexylidene)bisphenol (molar ratio: 2:1) was disposed between the transparent electrode and the luminescent layer and that conditions for coating two insulating layers were changed so as to coat in a total layer thickness of 8 µm.

EL element 113: The EL element was produced in the same manner as for EL element 101, except that a 1.0-µm thick barrier layer of a polycarbonate of bisphenol A and 4,4'-(3,3,5-trimethylcyclohexylidene)bisphenol (molar ratio: 2:1) was disposed between the transparent electrode and the luminescent layer, that conditions for coating two insulating layers were changed so as to coat in a total layer thickness of 20 µm, and that the thickness of the luminescent layer was changed to 40 µm.

EL element 114: The EL element was produced in the same manner as for EL element 101, except that a 1.0-µm thick barrier layer of a polycarbonate of bisphenol A and 4,4'-(3,3,5-trimethylcyclohexylidene)bisphenol (molar ratio: 2:1) was disposed between the transparent electrode and the luminescent layer, that conditions for coating two insulating layers were changed so as to coat in a total layer thickness of 20 µm, and that the thickness of the luminescent layer was changed to 60 µm.

EL element 115: The EL element was produced in the same manner as for EL element 101, except that the luminescent particles D were used, that a 1.0-µm thick barrier layer of a polycarbonate of bisphenol A and 4,4'-(3,3,5-trimethylcyclohexylidene)bisphenol (molar ratio: 2:1) was disposed between the transparent electrode and the luminescent layer, that conditions for coating two insulating layers were changed so as to coat in a total layer thickness of 20 µm, and that the thickness of the luminescent layer was changed to 40 µm.

**Table 2**

| EL Element | Luminescent Particles | Barrier Layer | | Thickness of Insulating Layer | Thickness of Luminescent Layer | Remarks |
|---|---|---|---|---|---|---|
| | | Kind | Thickness | | | |
| 101 | A | none | --- | 35 µm | 30 µm | comparative |
| 102 | A | Polycarbonate between bisphenol A and 4,4'-(3,3,5-trimeth yl-cyclohexylydene) bisphenol (molar ratio: 2:1) | 1.0 µm | 35 µm | 30 µm | invention |
| 103 | B | Polycarbonate between bisphenol A and 4,4'-(3,3,5-trimeth yl-cyclohexylydene) bisphenol (molar ratio: 2:1) | 1.0 µm | 35 µm | 30 µm | invention |
| 104 | C | Polycarbonate between bisphenol A and 4,4'-(3,3,5-trimeth yl-cyclohexylydene) bisphenol (molar ratio: 2:1) | 1.0 µm | 35 µm | 30 µm | comparative |
| 105 | A | Polycarbonate (manufactured by Teijin; TS-2020) | 1.0 µm | 35 µm | 30 µm | invention |
| 106 | A | Cyanoethylpullulan and polycarbonate (manufactured by Teijin; TS-2020)(volume ratio: 3:1) | 1.0 µm | 35 µm | 30 µm | invention |
| 107 | A | Cyanoethylpullulan and polycarbonate (manufactured by Teijin; TS-2020) (volume ratio: 9:1) | 1.0 µm | 35 µm | 30 µm | invention |
| 10B | A | Polycarbonate between bisphenol A and 4,4'-(3,3,5-trimeth yl-cyclohexylydene) bisphenol (molar ratio: 2:1) | 0.5 µm | 35 µm | 30 µm | invention |
| 109 | A | Polycarbonate between bisphenol A and 4,4'-(3,3,5-trimeth yl-cyclohexylydene) bisphenol (molar ratio: 2:1) | 5.0 µm | 35 µm | 30 µm | invention |
| 110 | A | Polycarbonate between bisphenol A and 4,4'-(3,3,5-trimeth yl-cyclohexylydene) bisphenol (molar ratio: 2:1) | 15 µm | 35 µm | 30 µm | invention |
| 111 | A | Polycarbonate between bisphenol A and 4,4'-(3,3,5-trimeth yl-cyclohexylydene) bisphenol (molar ratio: 2:1) | 1.0 µm | 20 µm | 30 µm | invention |
| 112 | A | Polycarbonate between bisphenol A and 4,4'-(3,3,5-trimeth yl-cyclohexylydene) bisphenol (molar ratio: 2:1) | 1.0 µm | 8 µm | 30 µm | invention |
| 113 | A | Polycarbonate between bisphenol A and 4,4'-(3,3,5-trimeth yl-cyclohexylydene) bisphenol (molar ratio: 2:1) | 1.0 µm | 20 µm | 40 µm | invention |
| 114 | A | Polycarbonate between bisphenol A and 4,4'-(3,3,5-trimeth yl-cyclohexylydene) bisphenol (molar ratio: 2:1) | 1.0 µm | 20 µm | 60 µm | invention |
| 115 | D | Polycarbonate between bisphenol A and 4,4'-(3,3,5-trimeth yl-cyclohexylydene) bisphenol (molar ratio: 2:1) | 1.0 µm | 20 µm | 40 µm | invention |

Relative luminances obtained by applying a voltage of 150 V to the thus obtained EL elements using an AC power source having a frequency of 1,000 kHz are shown in Table 3 taking the luminance of EL element 101 as 100. Also, time (half-lifetime of luminance) required for the luminance to decrease to 300 cd/m² after continuously allowing each element to generate luminescence by applying a voltage regulated so as to show an initial luminance of 600 cd/m² is also shown in Table 3.

**Table 3**

| | Relative Initial Luminance at 150 V | Half-lifetime of Luminance under the Condition of 600 cd/m² in Initial Luminance | Remarks |
|---|---|---|---|
| EL Element 101 | 100 | 120 hrs | comparative |
| EL Element 102 | 90 | 260 hrs | invention |
| EL Element 103 | 108 | 280 hrs | invention |
| EL Element 104 | 55 | 160 hrs | comparative |
| EL Element 105 | 88 | 270 hrs | invention |
| EL Element 106 | 95 | 260 hrs | invention |
| EL Element 107 | 95 | 160 hrs | invention |
| EL Element 108 | 95 | 250 hrs | invention |
| EL Element 109 | 85 | 260 hrs | invention |
| EL Element 110 | 80 | 250 hrs | invention |
| EL Element 111 | 102 | 260 hrs | invention |
| EL Element 112 | 115 | 180 hrs | invention |
| EL Element 113 | 99 | 300 hrs | invention |
| EL Element 114 | 80 | 250 hrs | invention |
| EL Element 115 | 110 | 310 hrs | invention |

It can be seen, by comparing the EL elements 101 and 102 with each other, that, when a barrier layer of a polycarbonate of a thermoplastic resin of bisphenol A and 4,4'-(3,3,5-trimethylcyclohexylidene)bisphenol (molar ratio: 2:1) is provided, durability can be improved more than two times the case where no barrier layer is provided.
It can be seen, by comparing the EL elements 102, 103 and 104 with each other, that luminescent particles having a smaller size and a smaller coefficient of variation provide a higher initial luminance at 150 V and a longer half-lifetime of luminance, thus providing favorable results.
It can be seen, by comparing the EL elements 105, 106 and 107 with each other, that incorporation of cyanoethylpullulan as well as polycarbonate serves to suppress reduction of the initial luminance at 150 V and provide a long half-lifetime of luminance. However, from the results of the EL element 107, it can be seen that, though durability-improving effect of the barrier layer can be obtained also with the EL element 107, more durability-improving effect can be obtained in the case where the volume ratio of the thermoplastic resin of polycarbonate amounts to 20% or more.

It can be seen, by comparing the EL element 102 with the EL elements 108 to 110, that a barrier layer having a smaller thickness can more suppress reduction of the initial luminance and that, even when the thickness thereof is small, a sufficient durability-improving effect can be obtained. From the standpoint of initial luminance, the thickness is preferably 10 µm or smaller.
It can be seen, by comparing the EL element 102 with the EL elements 111 to 115, that a reduced initial luminance can be compensated and, further, durability-improving effect can be obtained by reducing the total thickness of the two insulating layers and increasing the thickness of the luminescent layer. However, from the standpoint of the initial luminance, the thickness of the luminescent layer is preferably 50 µm or smaller. In the case where platinum is further incorporated in the luminescent particles, there were obtained much higher luminance and much more improved durability-improving effect.

It can be seen from these results that EL elements containing luminescent particles having the size and the coefficient of variation as in the invention can minimize reduction of initial luminance and can provide a remarkable durability-improving effect.

While the invention has been described in detail and by reference to particular embodiments, it is apparent to those skilled in the art that various alterations and modifications can be made without departing from the spirit and the scope of the invention.
This application is based on Japanese Patent Application filed on February 28, 2005 (Japanese Patent Application No. 2005-053565), and the contents are hereby incorporated by reference.

## Claims

1. A dispersion type electroluminescent element comprising:
a pair of electrodes that includes a back electrode and a transparent electrode;
at least an insulating layer and a luminescent layer containing luminescent particles having an average size of from 1 µm to less than 20 µm and a coefficient of variation of from 3% to less than 35%, the insulating layer and luminescent layer being disposed between the pair of electrodes; and
a barrier layer containing at least one material selected from the group consisting of a thermoplastic resin, a thermoset resin and a Ultraviolet-cured resin between the transparent electrode and the luminescent layer.

2. The dispersion type electroluminescent element as claimed in claim 1, wherein the at least one material selected from the group consisting of a thermoplastic resin, a thermoset resin and a Ultraviolet-cured resin which constitutes the barrier layer amounts to 20% or more by volume ratio of the barrier layer.

3. The dispersion type electroluminescent element as claimed in claim 1 or 2, wherein the barrier layer has a thickness of from 0.01 µm to less than 10 µm.

4. The dispersion type electroluminescent element as claimed in any one of claims 1 to 3, wherein the insulating layer has a thickness of from 10 µm to less than 30 µm.

5. The dispersion type electroluminescent element as claimed in any one of claims 1 to 4, wherein the luminescent layer has a thickness of from 30 µm to less than 70 µm.

6. The dispersion type electroluminescent element as claimed in any one of claims 1 to 5,
wherein
the luminescent particles comprise zinc sulfide particles containing copper as an activator, and contain at least one kind of metal elements belonging to the second transition element series of group 6 to group 10.
